# EUROPÄISCHE PATENTSCHRIFT

(11) **EP 1 576 363 B1**
(45) Veröffentlichungstag und Bekanntmachung des Hinweises auf die Patenterteilung: **12.08.2009**
(21) Anmeldenummer: 03773483.7
(22) Anmeldetag: 04.10.2003
(51) Int. Cl.: G01N 29/06

(54) **ULTRASCHALLPRÜFGERÄT UND VERFAHREN ZUR AUSWERTUNG VON ULTRASCHALLSIGNALEN**
ULTRASONIC TEST APPARATUS AND METHOD FOR THE EVALUATION OF ULTRASONIC SIGNALS
APPAREIL D'ESSAI ULTRASONORE ET PROCEDE D'EVALUATION DE SIGNAUX ULTRASONORES

(30) Priorität: 19.12.2002 DE 10260063; 16.08.2003 DE 10337657
(43) Veröffentlichungstag der Anmeldung: 21.09.2005
(73) Patentinhaber: GE Inspection Technologies GmbH, 50354 Hürth (DE)
(72) Erfinder: KLEINERT, Wolfgang, 53125 Bonn (DE)
(74) Vertreter: Kayser, Martin
(86) Internationale Anmeldenummer: PCT/DE2003/003279
(87) Internationale Veröffentlichungsnummer: WO 2004/057325

(56) Entgegenhaltungen:
- US-A- 4 176 658
- US-B1- 6 301 512
- US-B1- 6 327 921
- V. DEUTSCH, M. PLATTE, M.VOGT: "3.4 Fehlernachweis und Gerätejustierung" ULTRASCHALLPRÜFUNG, 1997, Seiten 80-133, XP002280036 BERLIN, HEIDELBERG, NEW YORK
- GE INSPECTION TECHNOLGIES: "USM 35 Ultrasonic Flaw Detector"[Online] XP002280037 Gefunden im Internet: URL:http://www.geinspectiontechnologies.co m/products/Ultrasonics/FlawDetectors/usm35 .html> [gefunden am 2004-05-10]
- DEUTSCH V. ET AL: '3.2 Ultraschallprüfgeräte' ULTRASCHALLPRÜFUNG 1997, BERLIN, HEIDELBERG, NEW YORK, Seiten 55 - 73
- JOSÉ MANUEL SÁNCHEZ ET AL: 'PORTABLE ULTRASONIC D.A.A.S. FOR MANUAL INSPECTIONS WITH NON MECHANIC AIR BORNE PROBE POSITIONING' NDT.NET - FEBRUARY 2003, VOL. 8 NO.2, [Online] Juni 2002, PAPER PRESENTED AT THE 8TH ECNDT, BARCELONA, Seiten 1 - 3 Gefunden im Internet: <URL:http://www.ndt.net/article/ecndt02/147 /147.htm;> [gefunden am 2008-04-22]
- DINER N. ET AL: 'INES MOVIES: a new acoustic data acquisition and processing system' FIRST FRENCH CONFERENCE ON ACOUSTICS, APRIL 1990, COLLOQUE DE PHYSIQUE 1990, LYON, FRANCE, Seiten 939 - 942

## Beschreibung

Die Erfindung bezieht sich auf Ultraschall-Prüfgerät für die zerstörungsfreie Prüfung eines Prüfkörpers, mit den Merkmalen des Oberbegriffs des Patentanspruchs 1

Außerdem bezieht sich die Erfindung auf ein Verfahren zur Darstellung von Echosignalen, die mit Hilfe eines oben beschriebenen Ultraschall-Prüfgeräts für die zerstörungsfreie Prüfung eines Prüfkörpers gewonnen werden.

Für die zerstörungsfreie Prüfung eines Werkstücks durch Ultraschall sind geeignete Prüfgeräte bekannt. Ganz allgemein verwiesen wird auf das DE-Buch von J. und. H. Krautkrämer, Werkstoffprüfung mit Ultraschall, sechste Auflage.

Aus V. Deutsch, M. Platte, M. Vogt: "3.4 Fehlernachweis und Gerätejustierung" Ultraschallprüfung, 1997, S. 80-133, XP002280036, Berlin, Heidelberg, New York ist ein Ultraschallprüfgerät bzw. ein Verfahren zur Darstellung von Ultraschallsignalen bekannt. Darin wir beschrieben, dass die Ortung eines Reflektors im Prüfstück mit geometrischen Überlegungen möglich ist und auf Basis der bekannten und gemessenen Daten errechnet werden kann. Diese Verfahrensweise ist sehr aufwendig. Der Prüfer muss für eine erfolgreiche Untersuchung den Prüfkörper mit dem Winkelprüfkopf mit gleichbleibender Genauigkeit abfahren. Dabei muss der Prüfer den Prüfkörper immer im Auge behalten und bekommt somit keine Rückmeldung über die Position des Winkelprüfkopfes im Verhältnis zu der zu untersuchenden Schweißnaht. Dies führt zum einen zu ungenauen Messungen und zum anderen zu Schwierigkeiten die relevante Position des Winkelprüfkopfes wieder zu finden, wenn ein Fehler erkannt wurde.

Der Winkelprüfkopf gibt hochfrequente Schallimpulse (ca. 1 - 10 MHz) ab, die in das zu prüfende Werkstück eingeschallt werden und die dann einerseits an der Eintrittsfläche reflektiert werden und zum Winkelprüfkopf zurücklaufen und die andererseits in das Werkstück eindringen, wo sie an einer Rückwand des Werkstücks mindestens einmal reflektiert werden. An inneren Inhomogenitäten, wie zum Beispiel an einem Materialfehler, treten Schallreflexionen auf, die vom Winkelprüfkopf wieder empfangen und im Ultraschallgerät verarbeitet werden.

Das erfindungsgemäße Verfahren ist für eine Vielzahl üblicher Messverfahren geeignet, beispielhaft wird die Erfindung im Folgenden anhand des Impuls-Echoverfahren erläutert. Der Winkelprüfkopf gibt vorzugsweise periodisch Ultraschallimpulse ab und empfängt danach Echosignale dieser abgegebenen Ultraschallimpulse. Im Allgemeinen ist das Echosignal der Eintrittsfläche ein besonders starkes Signal, das die weiteren Echosignale übersteigt. Die weiteren Echosignale stammen aus dem Werkstück und insbesondere von der Rückwand des Werkstücks. Insoweit ist das Prüfungsverfahren für Werkstücke geeignet, deren Eintrittsfläche im Wesentlichen parallel zur Rückwand verläuft, so dass es zur Ausbildung mehrerer Hin- und Hergänge des Ultraschallimpulses im Werkstück kommt.

Der Winkelprüfkopf wird neben den zu prüfenden Bereich angeordnet und das Schallsignal wird sozusagen seitlich in den relevanten Bereich eingeschallt. Dies ist beispielsweise bei der Ultraschallprüfung von Schweißnähten der Fall. Die Ultraschallwelle läuft in das Material hinein, bis an einer Grenzfläche eine teilweise oder völlige Reflexion stattfindet. Liegt die reflektierende Fläche senkrecht zur Ausbreitungsrichtung, so wird die Schallwelle in ihre ursprüngliche Richtung reflektiert und erreicht nach einer gewissen Laufzeit wieder einen im Winkelprüfkopf angeordneten piezoelektrischen Schwinger, der sie in einen elektrischen Impuls zurückverwandelt. Der zurückkehrende Ultraschall wird zum Teil an der Grenzfläche Schwinger-Werkstücksoberfläche erneut reflektiert, dieser kleine Schallanteil durchläuft das Werkstück ein zweites Mal. Auf diese Weise entsteht beim Impuls-Echoverfahren durch mehrfache Reflexion an Grenzflächen (Prüfteil-Rückwand oder Fehler) eine sogenannte Echofolge.

Bei einem ungestörten Prüfkörper wird der Schall also jeweils zwischen Eintrittsfläche und Rückwand des Prüfkörpers reflektiert und läuft unter einem bestimmten Winkel immer weiter in die vom Winkelprüfkopf wegweisende Richtung in den Prüfkörper hinein.

Bei der Überprüfung von Schweißnähten wird der Winkelprüfkopf entlang der Schweißnaht bewegt, bis ein maximales Fehlerecho entsteht. Die empfangenen Echosignale werden dabei unmittelbar auf dem Monitor dargestellt. Die Darstellung erfolgt allgemein als sogenanntes A-Bild, bei dem über der Zeitachse die Spannungswerte der empfangenen Echosignale dargestellt werden. Bei mehrfachen Hin- und Hergängen zwischen Eintrittsfläche und Rückwand erhält man eine Folge gleichabständiger Echosignale, deren Amplitude mit wachsender Zeit im Allgemeinen abnimmt. Dabei werden die einzelnen Hin- und Hergänge, also die Strecke des Schall von der Eintrittsfläche zur Rückwand und umgekehrt, jeweils als Bein bezeichnet. Ausgehend vom Winkelprüfkopf wird also zunächst ein erstes Bein erzeugt, das von der Eintrittsfläche schräg bis hin zur Rückwand verläuft. Dort wird der Schall reflektiert und es bildet sich ein zweites Bein, welches von der Rückwand bis zur Eintrittsfläche verläuft, usw.

Wegen der schräg verlaufenden Schallwege ist die Ortung eines Reflektors (Fehlers) im Prüfstück nur mit geometrischen Überlegungen möglich und wird auf Basis der bekannten und gemessenen Daten errechnet.

Für eine erfolgreiche manuelle Untersuchung des Prüfkörpers ist es notwendig, dass der Prüfer Prüfkörper mit dem Winkelprüfkopf und mit gleichbleibender Genauigkeit abfährt. Nur so kann ein ausreichend genaues Ergebnis erzielt werden. Auch ist dies insbesondere für eine spätere Dokumentation der Untersuchung notwendig. Gerade bei der Untersuchung großer Prüfkörper, insbesondere bei der Untersuchung von langen Schweißnähten kann es passieren, dass der Prüfer auf Grund von Konzentrationsmangel die abzufahrende Wegstrecke nur ungenau einhält.

Bei den Messverfahren nach dem Stand der Technik muss der Prüfer deshalb stets den Prüfkörper im Auge behalten und bekommt beispielsweise vom Monitor keinerlei Rückmeldung über die Position des Winkelprüfkopfes im Verhältnis zu der zu untersuchenden Schweißnaht. Dies führt dazu, dass der Prüfer stets abwechselnd auf den Monitor und auf den Prüfkörper blicken muss. Erkennt er beispielsweise während der Messung auf dem Monitor, also im A-Bild einen Fehler und reagiert er zu spät, hat sich die Hand mit dem Winkelprüfkopf schon von der entscheidenden Stelle entfernt. Da der Prüfer nur auf den Motor geblickt hatte, fällt es ihm dann relativ schwer relevante Position wieder zu finden.

Hier setzt nun die vorliegende Erfindung an. Sie hat es sich zur Aufgabe gemacht, die Arbeit des Prüfers zu erleichtern. Ziel der Erfindung ist es, ein Verfahren zur Auswertung von mit Hilfe eines Winkelprüfkopfes erzeugten Ultraschallsignalen zu entwickeln, bei dem der Prüfer schon während der Überprüfung zusätzliche Informationen derart erhält, dass ihm die Überprüfung des Prüfkörpers erleichtert wird. Insbesondere soll die Erfindung dazu führen, dass der Prüfer während der Untersuchung Hilfsinformationen bekommt, die ihm die notwendige exakte Führung des Winkelprüfkopfes erleichtern.

Erfindungsgemäß wird dies durch ein Ultraschall-Prüfgerät, mit den Merkmalen der Patentanspruchs 1 als auch durch ein Verfahren mit den Verfahrensschritten des Patentanspruchs 8 erreicht.

Dies bedeutet, dass der Prüfer auf dem Monitor auf den ersten Blick erkennen kann, ob sich ein ermitteltes relevantes Signal, beispielsweise eine Fehlstelle, im Bereich des ersten, des zweiten oder eines anderen Beins befindet. Daraus ergibt sich unmittelbar, wie weit das relevante Signal vom Winkelprüfkopf entfernt ist. Dies erleichtert dem Prüfer die Untersuchung des Prüfkörpers deutlich, da er durch Blick auf den Monitor auch eine schnell zu erfassende Informationen bezüglich der Position des Winkelprüfkopfes erhält. Sollte er während des Untersuchungsvorgangs ein relevantes Signal auf dem Monitor erblicken, erkennt er sofort, wie weit die Ursache des Signals beispielsweise die Fehlstelle von dem Winkelprüfkopf entfernt ist. Dies erleichtert dem Prüfer die Arbeit ungemein.

Die Erfindung ist nicht nur für das manuelle Überprüfen von Prüfkörpern geeignet, sie unterstützt auch das automatisierte Abfahren eines Prüfkörpers mit einem Winkelprüfkopf. Dies deshalb, weil ein Prüfer, der den Weg des Winkelprüfkopfes ja nicht mit seiner Hand kontrolliert, mit einem kurzen Blick auf den Monitor anhand der Darstellung sofort erkennt, ob sich die zu prüfende Stelle, beispielsweise die Schweißnaht, im richtigen Bein des Schallwegs befindet und somit der Winkelprüfkopf den korrekten Abstand zur Schweißnaht aufweist.

Im Sinne der vorliegenden Erfindung ist der Begriff Fehler nicht nur wörtlich, also nicht nur im Sinne von Ungänze zu verstehen, sondern soll vielmehr im Sinne von signifikantem Signal verstanden werden. Die Erfindung beinhaltet also das Auffinden jeglicher relevanter Stellen in einem Prüfkörper.

Voraussetzung für ein solches System ist, dass der Einschallwinkel sowie die Wanddicke des Prüfkörpers bekannt sind. Aus diesen Informationen lässt sich der Schallweg für ein Bein und damit der Übergang von einem Bein zum nächsten bzw. der Punkt, an dem die Reflektion des Schall an der Eintrittsfläche oder an der Rückwand erfolgt leicht berechnen.

Die unterschiedliche Darstellung der Beine auf dem Monitor bzw. derjenigen Bereiche, die jeweils einem Bein entsprechen, kann durch jede geeignete Darstellungsmethode erfolgen.

Zusätzlich kann der Bereich der Messkurve, der jeweils einem bestimmten Bein zugeordnet ist, durch eine besondere Schraffur oder einen besonderen Grauton des Hintergrundes hervorgehoben sein.

Alternativ ist auch ein zusätzliches Symbol an denjenigen Punkten der Messkurve denkbar, an denen die Reflektion des Schalls an der Eintrittsfläche oder der Rückwand erfolgt. Diese Punkte entsprechen den Übergängen von einem Bein zum nächsten. Als solche Symbole sind beispielsweise alphanumerische Zeichen oder auch Strichlinien, die die Messkurve schneiden, denkbar.

In einer besonders vorteilhaften Ausführungsvariante weist der Monitor ein Farbdisplay auf. Die Messkurve kann dann, abhängig davon, welches Bein der Messkurve zu Grunde liegt in jeweils verschiedenen Farben dargestellt werden. Hier bietet sich die Verwendung kräftiger Farben, beispielsweise von Grundfarben an. Auch kann der Hintergrund der Messkurve entsprechend unterschiedlichen Farben dargestellt werden. Neben LCD-Displays haben sich auch andere Farbmonitore, beispielsweise Plasma-Displays bewährt.

In einer weiteren vorteilhaften Ausführungsvariante weist der Winkelprüfkopf einen Taster zur Aufnahme der Nullpunktposition zu Anfang des Prüfvorgangs auf. Dies bedeutet, dass die Prüfung an einer definierten Stelle auf den Prüfkörper beginnt, wobei diese Stelle im System gespeichert wird. Somit ist es möglich, relevante Positionen des Winkelprüfkopfes im Nachhinein auf Basis der gespeicherten Daten nachzuvollziehen. Der Winkelprüfkopf weist hierzu Mittel auf, die dazu dienen, die jeweilige Position auf der Oberfläche des zu prüfenden Körpers in Bezug auf einen Ort anzugeben der zum Zeitpunkt des Messstartes vorlag. Dies kann beispielsweise mit Hilfe einer Digitalkamera erfolgen, die mit dem Gehäuse des Winkelprüfkopfs fest verbunden ist. Sie ist so ausgerichtet, dass sie die Oberfläche des zu prüfenden Körpers erfasst. Dabei soll sie möglichst nahe an der Stelle ein Bild dieser Oberfläche liefern, an der einen Zentralstrahl des aktiven Schallelements die Oberfläche durchtritt. Mittels dieser Digitalkamera wird in Zeitabständen ein elektronisches Bild von dem Teilstück der Oberfläche, das sich jeweils unter der Linse der Digitalkamera befindet, dass also in der Gegenstandsebene liegt. Das Teilstück kann beispielsweise die Abmessungen von wenigen Millimetern, beispielsweise von 2 x 2 oder 4 x 4 mm haben. Hierzu wird auf die Anmeldung DE 100 58 174 A1 des gleichen Anmelders verwiesenen.

Auch kann es in vorteilhaft sein, wenn auf dem Monitor bzw. dem Display lediglich der Bereich des zu untersuchenden Prüfkörpers dargestellt wird, der bei der Untersuchung von Interesse ist. Dies kann beispielsweise die zu untersuchende Schweißnaht sein. Ist die Schweißnahtgeometrie bekannt und im Ultraschall-Prüfgerät bzw. im Rechner gespeichert, können sowohl räumliche Grenzwerte als auch Grenzwerte bezüglich der zu berücksichtigenden Amplitude eingegeben werden. Wenn die Nullpunktposition zu Anfang des Messvorgangs ermittelt wurde, kann die Entfernung des Winkelprüfkopfes von der Schweißnaht auf Basis der Beinlänge bzw. der Wanddicke und des Einschallwinkels jederzeit berechnet werden. Somit ist es möglich, jederzeit und unabhängig von der Position des Winkelprüfkopfes lediglich den Bereich der Schweißnaht auf dem Monitor darzustellen. Gerade dann ist die unterschiedliche Darstellung der Beine besonders vorteilhaft. Dies deshalb, weil bei korrekt eingehaltenen Abstand zur Schweißnaht ein möglicher Fehler bzw. ein relevantes Signal stets im gleichen Bein auftreten muss und der Monitor und/oder die Messkurve entsprechend stets die gleiche Darstellung aufweisen muss.

Je nach notwendiger Bewegung des Winkelprüfkopfs kann es natürlich auch möglich sein, dass das relevante Signal in einem Streckenbereich von beispielsweise zwei oder drei Beinen auftreten muss, sich die Darstellung also entsprechend ändert.
Der Prüfer bemerkt mit Blick auf den Monitor und ohne zusätzlichen Blick auf den Prüfkörper durch eine Änderung der Darstellung sofort, ob er sich mit dem Winkelprüfkopf zu weit von der Schweißnaht entfernt hat.

Weitere Vorteile und Merkmale der Erfindung ergeben sich aus den Ansprüchen sowie der nun folgenden Beschreibung von nicht einschränkend zu verstehenden Ausführungsbeispielen der Erfindung, die unter Bezugnahme auf die Zeichnung im Folgenden näher erläutert werden. In dieser Zeichnung zeigen:
- Figur 1:: eine Prinzipdarstellung des Schallverlaufs eines Ultraschallsignals ausgehend von einem Winkelprüfkopf durch einen Prüfkörper,
- Figur 2:: eine beispielhafte erfindungsgemäße Darstellung eines A-Bildes.

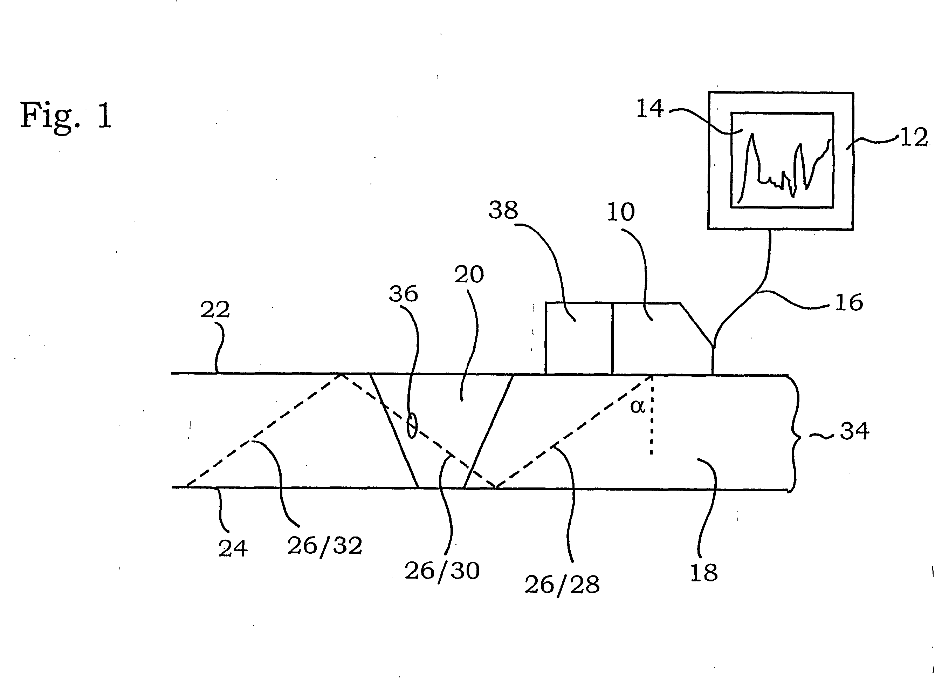

Figur 1 zeigt den prinzipiellen Aufbau einer Ultraschallmessung mit einem Winkelprüfkopf 10 als Ultraschall-Prüfgerät im Querschnitt. Der Winkelprüfkopf 10, der einen Sender und einen Empfänger beinhaltet, ist mit einem Monitor 12, der wiederum ein Display 14 aufweist, über eine Leitung 16 verbunden. An Stelle der Leitung 16 ist auch eine andere Verbindungsart, beispielsweise per Funk, denkbar.

Der Winkelprüfkopf 10 ist auf einem Prüfkörper 18 angeordnet. Der Prüfkörper 18 ist hier ein Teilstück einer Stahlplatte, die mit einer zweiten Stahlplatte über eine Schweißnaht 20 verbunden ist. Der Prüfkörper 18 weist eine Eintrittsfläche 22 und eine Rückwand 24 auf. Zwischen der Eintrittsfläche 22 und der Rückwand 24 ist ein Schallweg als Linie angedeutet. Ausgehend vom Winkelprüfkopf 20 werden Sendeimpulse, also wird der Schall zunächst unter einem vorbestimmten Winkel α schräg in den Prüfkörper 18 eingeschallt, bildet ein erstes Bein 28 aus, wird dann an der Rückwand 24 reflektiert, bildet ein zweites Bein 30 aus, gelangt wieder zur Eintrittsfläche 22, wird erneut reflektiert und bildet ein drittes Bein 32 aus usw. In der beispielhaften Darstellung kreuzt der Schallweg 26 im Bereich seines zweiten Beins 30 die Schweißnaht 20. Aus einer Wanddicke 34 und dem Winkel α ist es leicht möglich, die Länge eines Beines 28, 30, 32 bzw. den Punkt des Übergangs von einem Bein 28, 30, 32 zum nächsten zu berechnen.

Trifft der Schall auf einen Fehler 36, beispielsweise einen Lunker, wird er reflektiert und gelangt je nach Ausrichtung des Fehlers als Echosignal zurück zum Empfänger. Weiß nun der Prüfer, welches Bein 28, 30, 32 den Fehler 36 getroffen hat, kann er unmittelbar auf den ungefähren Abstand des Fehlers 36 vom Winkelprüfkopf 10 schließen, zumindest weiß er, dass sich der Fehler auf der Wegstrecke des entsprechenden Beins 28, 30, 32 befindet.

In einer weiteren vorteilhaften Ausführungsvariante weist der Winkelprüfkopf 10 einen Taster zur Aufnahme der Nullpunktposition zu Anfang des Prüfvorgangs auf. Dies bedeutet, dass die Prüfung an einer definierten Stelle auf den Prüfkörper beginnt, wobei diese Stelle im System gespeichert wird. Der Winkelprüfkopf 10 weist hierzu ein Mittel 38 auf, das fest mit dem Winkelprüfkopf 10 verbunden ist und dazu dient, die jeweilige Position auf der Oberfläche des zu prüfenden Körpers in Bezug auf einen Ort anzugeben der zum Zeitpunkt des Messstartes vorlag. Dies kann beispielsweise mit Hilfe einer Digitalkamera erfolgen, die mit dem Gehäuse des Winkelprüfkopfs fest verbunden ist. Sie ist so ausgerichtet, dass sie die Oberfläche des Prüfkörpers erfasst.

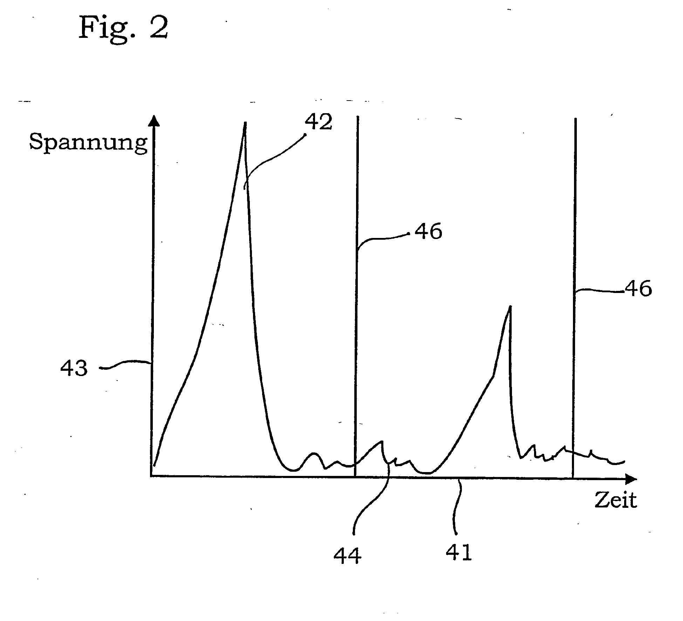

Fig. 2 zeigt in einer Prinzipdarstellung ein sogenanntes A-Bild 40, welches auf dem Display 14 des Monitors 12 dargestellt wird. Aufgetragen über einer Zeitachse 41 in Sekunden (als x-Achse) ist auf der y-Achse der Spannungswert U in Volt der empfangenen Signale (Spannungswertachse 43).

Der Sender gibt periodisch Sendeimpulse ab, die den Winkelprüfkopf 10 veranlassen, kurzzeitige Ultraschallimpulse abgeben. Die einzelnen Ultraschallimpulse laufen zunächst durch ein Ankopplungsmittel. Ein Teil jedes Impulses wird im Allgemeinen an der Eintrittsfläche 22 reflektiert und kommt als Eintrittsecho 42 zeitlich vor weiteren Signalen im Empfänger an. Ein Teil jedes Ultraschallimpulses dringt im Allgemeinen in das Werkstück ein und wird, wie bereits erläutert, zunächst an der Rückwand 24 reflektiert und pflanzt sich entsprechend zwischen der Eintrittsfläche 22 und der Rückwand 24 im Prüfkörper fort. Es entsteht die gezeigte Messkurve 44. Darüber hinaus wird ein Teil des in das Werkstück eingedrungenen Ultraschallimpulses auch an Fehlstellen wie dem Fehler 36 reflektiert, sofern solche vorliegen.

Das Ultraschallmessgerät bzw. ein mit diesem zusammenwirkender Rechner berechnet die Positionen, an denen das ein Bein 28, 30, 32 in das nächste übergeht, also der Schall an der Eintrittsfläche 22 oder der Rückwand 24 reflektiert wird. Erfindungsgemäß werden diese Daten genutzt, um die einzelnen Beine 28, 30, 32 auf dem Display 14 visuell darzustellen. Wie in Figur 2 dargestellt, kann dies durch Linien 46 erfolgen, die die Messkurve 44 an den entsprechenden Stellen schneiden. Alternativ ist auch möglich den Hintergrund der Messkurve 44 den Beinen 28, 30, 32 entsprechend zu gestalten, beispielsweise zu schraffieren oder in verschiedene Grautöne einzufärben.

Als besonders vorteilhaft hat sich der Verwendung eines Farbdisplays erwiesen, da somit die Kennzeichnung der den einzelnen Beinen 28, 30, 32 entsprechenden Abschnitte der Messkurve 44 sowohl vereinfacht als auch optisch deutlicher wird. Entweder können auch dann die Hintergründe der Messkurve 44 unterschiedlich gefärbt sein, es kann aber auch die Messkurve 44 selbst in Abhängigkeit der Herkunft der Daten aus den jeweiligen Beinen 28, 30, 32 unterschiedliche Farben aufweisen.

Auch kann es vorteilhaft sein, wenn auf dem Monitor 12 bzw. dem Display 14 lediglich der Bereich des zu untersuchenden Prüfkörpers 18 dargestellt wird, der bei der Untersuchung von Interesse ist. Dies kann beispielsweise die zu untersuchende Schweißnaht 20 sein. Es können sowohl räumliche Grenzwerte als auch Grenzwerte bezüglich der zu berücksichtigenden Amplitude eingegeben und berücksichtigt werden. Dies bedeutet, dass nur Signale angezeigt werden, deren Ursprung entweder der Bereich der zu untersuchenden Schweißnaht 20 ist und/oder deren Signalstärke den minimalen Grenzwert übersteigt und oder den maximalen Grenzwert unterschreitet. Auch dies erleichtert dem Prüfer die Arbeit.

Aus dem Vorangegangenen ist ersichtlich, dass sich das erfindungsgemäße Gerät und insbesondere auch das damit durchgeführte Verfahren zur Prüfung von Werkstücken für eine Serienmessung eignet. Beispiel für eine Serienmessung ist die Prüfung von Schweißverbindungen von Kraftfahrzeugkarosserien. Das Prüfgerät wird zunächst an einem Werkstück oder wenigen Werkstücken einjustiert, anschließend wird die Serienprüfung durchgeführt.

Die Erfindung ist nicht auf die beschriebenen Ausführungsbeispiele beschränkt, sondern umfasst auch alle weiteren gleichwirkenden Ausführungsformen.

## Patentansprüche

1. Ultraschall-Prüfgerät für die zerstörungsfreie Prüfung eines Prüfkörpers (18), mit
- einem bezüglich des Prüfkörpers (18) bewegbaren Prüfkopf, insbesondere einem Winkelprüfkopf (10),
- einem Sender, der mit dem Prüfkopf verbunden ist und der Sendeimpulse erzeugt und an den Prüfkopf abgibt,
- einem Empfänger, der mit dem Prüfkopf verbunden ist und Echosignale empfängt,
- einem Rechner zur Verarbeitung der empfangenen Echosignale, und
- einem Monitor (12) mit einem Display (14) zur Darstellung der empfangenen Echosignale, der mit dem Rechner verbunden ist,
wobei
- der Prüfkopf Ultraschallimpulse abgibt und unter einem bestimmten Winkel (a) in den Prüfkörper (18) einschallt,
- die Ultraschallimpulse in den Prüfkörper (18) eindringen, an einer Rückwand (24) des Prüfkörpers (18) mindestens einmal reflektiert werden und **dadurch** mindestens ein erstes Bein (28), das von der Eintrittsfläche (22) bis zur Rückwand (24) reicht, und ein zweites Bein (30), das dann von der Rückwand (24) bis zur Eintrittsfläche (22) reicht, ausbilden,
- der Rechner Positionen berechnet, an denen jeweils ein Bein (28, 30, 32) in ein nächstes Bein (28, 30, 32) übergeht,
**dadurch gekennzeichnet, dass**
der Rechner die Echosignale auf dem Display (14) in Form einer Messkurve (44) in einem Diagramm darstellt, bei dem eine Spannungswertachse (43) über einer Zeitachse (41) aufgetragen ist, wobei die Messkurve (44) in Abhängigkeit von dem Bein (28, 30, 32) aus dem die empfangenen Echosignale stammen in einer für das jeweilige Bein (28, 30, 32) charakteristischen Linienart und/oder Farbe dargestellt wird."

2. Ultraschall-Prüfgerät nach Anspruch 1, **dadurch gekennzeichnet, dass** denjenigen Punkten der Messkurve (44), die jeweils dem Übergang von einem Bein (28,30) zum nächsten Bein (28,30) entsprechen, jeweils ein alphanumerisches Zeichen zugeordnet ist.

3. Ultraschall-Prüfgerät nach Anspruch 1, **dadurch gekennzeichnet, dass** an denjenigen Punkten der Messkurve (44), die jeweils dem Übergang von einem Bein (28,30) zum nächsten Bein (28,30) entsprechen, jeweils eine Linie (46) die Messkurve (44) schneidet.

4. Ultraschall-Prüfgerät nach Anspruch 1, **dadurch gekennzeichnet, dass** diejenigen Bereiche der Messkurve (44), die jeweils von einem bestimmten Bein (28,30) stammen, mit einem für das jeweilige Bein (28,30) charakteristischen Hintergrund hinterlegt sind.

5. Ultraschall-Prüfgerät nach Anspruch 1, **dadurch gekennzeichnet, dass** diejenigen Bereiche der Messkurve (44), die jeweils von einem bestimmten Bein (28,30) stammen, mit einem für das jeweilige Bein (28,30) charakteristischen farbigen Hintergrund hinterlegt sind.

6. Ultraschall-Prüfgerät nach einem der Ansprüche 1 bis 5, **gekennzeichnet durch** ein Mittel (38), das fest mit dem Prüfkopf verbunden ist und dazu dient, die jeweilige Position des Prüfkopfs auf der Oberfläche des Prüfkörpers (18) zu ermitteln.

7. Ultraschall-Prüfgerät nach einem der Ansprüche 1 bis 6, **dadurch gekennzeichnet, dass** durch Berücksichtigung von Grenzwerten bezüglich der Amplitude und/oder räumlicher Grenzwerte auf dem Display (14) lediglich der Bereich des zu untersuchenden Prüfkörpers (18) dargestellt ist, der bei der Untersuchung von Interesse ist.

8. Verfahren zur Darstellung von Echosignalen, die mit Hilfe eines Ultraschall-Prüfgeräts für die zerstörungsfreie Prüfung eines Prüfkörpers (18) gewonnen werden, wobei das Ultraschall-Prüfgerät aufweist :
- einen Prüfkopf, insbesondere einen Winkelprüfkopf (10),
- einen Sender, der mit dem Prüfkopf verbunden ist und der Sendeimpulse erzeugt und an den Prüfkopf abgibt,
- einen Empfänger, der mit dem Prüfkopf verbunden ist und Echosignale empfängt,
- einen Rechner zur Verarbeitung der empfangenen Echosignale, und
- einen Monitor (12) mit einem Display (14) zur Darstellung der empfangenen Echosignale, der mit dem Rechner verbunden ist,
mit den Verfahrensschritten:
a. Bewegen des Prüfkopfs entlang des Prüfkörpers (18), und dabei
b. Einschallen der Ultraschallimpulse unter einem bestimmten Winkel (a) in den Prüfkörper (18) derart, dass die Ultraschallimpulse in den Prüfkörper (18) eindringen, an einer Rückwand (24) des Prüfkörpers (18) mindestens einmal reflektiert werden und **dadurch** mindestens ein erstes Bein (28), das von der Eintrittsfläche (22) bis zur Rückwand(24) reicht, und ein zweites Bein (30), das dann von der Rückwand (24) bis zur Eintrittsfläche (22) reicht, ausbilden,
c. Berechnen der Positionen, an denen jeweils ein Bein (28, 30, 32) in ein nächstes Bein (28, 30, 32) übergeht, durch den Rechner
d. Darstellen der empfangenen Echosignale auf dem Display (14) in Form einer Messkurve (44) in einem Diagramm, bei dem eine Spannungswertachse (43) über einer Zeitachse (41) aufgetragen ist,
wobei die Messkurve (44) in Abhängigkeit von dem Bein (28, 30, 32) aus dem die Echosignale stammen in einer für das jeweilige Bein (28,30, 32) charakteristischen Lienenart und/oder Farbe dargestellt wird.

9. Verfahren nach Anspruch 8, **dadurch gekennzeichnet, dass** denjenigen Punkten der Messkurve (44), die jeweils dem Übergang von einem Bein (28,30) zum nächsten Bein (28,30) entsprechen, jeweils ein alphanumerisches Zeichen zugeordnet wird.

10. Verfahren nach Anspruch 8, **dadurch gekennzeichnet, dass** an denjenigen Punkten der Messkurve (44), die jeweils dem Übergang von einem Bein (28,30) zum nächsten Bein (28,30) entsprechen, jeweils eine Linie dargestellt wird, die (46) die Messkurve (44) schneidet.

11. Verfahren nach Anspruch 8, **dadurch gekennzeichnet, dass** diejenigen Bereiche der Messkurve (44), die jeweils von einem bestimmten Bein (28,30) stammen, mit einem für das jeweilige Bein (28,30) charakteristischen Hintergrund hinterlegt werden.

12. Verfahren nach Anspruch 8, **dadurch gekennzeichnet, dass** diejenigen Bereiche der Messkurve (44), die jeweils von einem bestimmten Bein (28,30) stammen, mit einem für das jeweilige Bein (28,30) charakteristischen farbigen Hintergrund hinterlegt werden.

13. Verfahren nach einem der Ansprüche 8 bis 12, **gekennzeichnet durch** ein Mittel (38), das fest mit dem Prüfkopf verbunden ist und dazu dient, die jeweilige Position des Prüfkopfs auf der Oberfläche des Prüfkörpers (18) zu ermitteln.

14. Verfahren nach einem der Ansprüche 8 bis 13, **dadurch gekennzeichnet, dass** durch Berücksichtigung von Grenzwerten bezüglich der Amplitude und/oder räumlicher Grenzwerte auf das Display (14) lediglich der Bereich des zu untersuchenden Prüfkörpers (18) dargestellt ist, der bei der Untersuchung von Interesse ist.

## Claims

1. An ultrasonic test apparatus for non-destructive testing of a test piece (18), with
- a probe, more specifically an angle-beam probe (10), that is movable with respect to said test piece (18),
- a transmitter that is connected to the probe and that generates transmission pulses, which it delivers to the probe,
- a receiver that is connected to the probe and that receives echo signals,
- a computer for processing the echo signals received and
- a monitor (12) with a display (14) for showing the echo signals received, said monitor being connected to said computer,
wherein
- the probe delivers ultrasonic pulses and insonifies the test piece (18) at a certain angle (a),
- the ultrasonic pulses penetrate said test piece (18), are at least once reflected from a back wall (24) of said test piece (18), thus forming at least one first leg (28), which extends from the input surface (22) to the back wall (24), and a second leg (30), which extends from said back wall (24) to said input surface (22),
- the computer calculates positions at which a respective leg (28, 30, 32) merges into a next leg (28, 30, 32),
**characterized in that**
said computer shows on said display (14) the echo signals in the form of a measurement curve (44) in a diagram in which an axis of voltage values (43) is plotted over an axis of time (41), wherein the measurement curve (44) is displayed in a type of line and/or color that is characteristic for the respective leg (28, 30, 32), depending on the leg (28, 30, 32) from which the echo signals received originate.

2. The ultrasonic test apparatus as set forth in claim 1, **characterized in that** an alphanumeric character is associated with those points on the measurement curve (44) that correspond to the transition from one leg (28, 30) to the next leg (28, 30).

3. The ultrasonic test apparatus as set forth in claim 1, **characterized in that** a line (46) intersects the measurement curve (44) at those points on the measurement curve (44) that correspond to a respective transition from one leg (28, 30) to the next leg (28, 30).

4. The ultrasonic test apparatus as set forth in claim 1, **characterized in that** those areas of the measurement curve (44) that originate from a certain leg (28, 30) are highlighted with a background that is characteristic for the respective leg (28, 30).

5. The ultrasonic test apparatus as set forth in claim 1, **characterized in that** those areas of the measurement curve (44) that originate from a certain leg (28, 30) are highlighted with a background color that is characteristic for the respective leg (28, 30).

6. The ultrasonic test apparatus as set forth in any one of the claims 1 through 5, **characterized by** a means (38) which is firmly connected to the probe and which serves for determining the respective position of the probe on the surface of the test piece (18).

7. The ultrasonic test apparatus as set forth in any one of the claims 1 through 6, **characterized in that**, by taking into consideration limit values with respect to amplitude and/or spatial limit values, only that area of the test piece (18) is displayed on the display (14) which is of interest for the inspection.

8. A method of displaying echo signals that are obtained with the help of an ultrasonic test apparatus for non-destructive testing of a test piece (18), said ultrasonic test apparatus comprising:
- a probe, in particular an angle-beam probe (10),
- a transmitter that is connected to the probe and that generates transmission pulses, which it delivers to the probe,
- a receiver that is connected to the probe and that receives echo signals,
- a computer for processing the echo signals received and
- a monitor (12) with a display (14) for showing the received echo signals, said monitor being connected to said computer,
said method comprising the following method steps:
a. moving said probe along said test piece (18), thereby
b. insonifying the test piece (18) with the ultrasonic pulses at a certain angle (a) in such a way that the ultrasonic pulses penetrate into said test piece (18), are reflected at least once from a back wall (24) of said test piece (18), thus forming at least one first leg (28), which extends from the input surface (22) to the back wall (24), and a second leg (30) that then extends from the back wall (24) to the input surface (22),
c. computing with the computer the positions at which a respective one of the legs (28, 30, 32) merges into a next leg (28, 30, 32)
d. displaying the received echo signals on the display (14) in the form of a measurement curve (44) in a diagram in which an axis of voltage values (43) is plotted over an axis of time (41), said measurement curve (44) being displayed in a type of line and/or color that is characteristic for the respective leg (28, 30, 32), depending on the leg (28, 30, 32) from which the echo signals received originate.

9. The method as set forth in claim 8, **characterized in that** an alphanumeric character is respectively associated with those points on the measurement curve (44) that correspond to the transition from one leg (28, 30) to the next leg (28, 30).

10. The method as set forth in claim 8, **characterized in that** a line (46) is displayed, which intersects the measurement curve at those points on the measurement curve (44) which correspond to the transition from one leg (28, 30) to the next leg (28, 30).

11. The method as set forth in claim 8, **characterized in that** those areas of the measurement curve (44) that originate from a certain leg (28, 30) are highlighted with a background that is characteristic for the respective leg (28, 30).

12. The method as set forth in claim 8, **characterized in that** those areas of the measurement curve (44) that originate from a certain leg (28, 30) are highlighted with a background color that is characteristic for the respective leg (28, 30).

13. The method as set forth in any one of the claims 8 through 12, **characterized by** a means (38) which is firmly connected to the probe and which serves for determining the respective position of the probe on the surface of the test piece (18).

14. The method as set forth in any one of the claims 8 through 13, **characterized in that**, by taking into consideration limit values with respect to amplitude and/or spatial limit values, only that area of the test piece (18) to be inspected is displayed on the display (14) which is of interest for the inspection.

## Revendications

1. Appareil de contrôle ultrasonore pour le contrôle non destructif d'une pièce (18) qu'il y a lieu d'examiner, avec
- un palpeur, notamment un palpeur d'angle (10), mobile par rapport à la pièce (18) qu'il y a lieu d'examiner,
- un émetteur qui est relié au palpeur et qui génère des impulsions d'émission et les délivre au palpeur,
- un récepteur qui est relié au palpeur et qui reçoit des signaux écho,
- un ordinateur pour le traitement des signaux écho reçus et
- un moniteur (12) avec un écran (14) pour représenter les signaux écho reçus, ce moniteur étant relié à l'ordinateur,
où
- le palpeur délivre des impulsions ultrasonores et insonifie la pièce (18) qu'il y a lieu d'examiner sous un certain angle (a),
- les impulsions ultrasonores pénètrent dans la pièce (18) qu'il y a lieu d'examiner, sont réfléchies au moins une fois d'une paroi arrière (24) de la pièce (18) qu'il y a lieu d'examiner et forment de ce fait au moins une première branche (28) qui s'étend depuis la surface d'entrée (22) jusqu'à la paroi arrière (24) et une deuxième branche (30) qui s'étend alors depuis la paroi arrière (24) jusqu'à la surface d'entrée (22),
- l'ordinateur calcule des positions dans lesquelles une branche (28, 30, 32) respective passe dans une prochaine branche (28, 30, 32),
**caractérisé en ce que**
l'ordinateur représente les signaux écho sur l'écran (14) sous forme de courbe de mesure (44) dans un diagramme dans lequel la tension (43) est inscrite en ordonnée tandis que le temps est porté en abscisse (41), la courbe de mesure (44) étant représentée par un type de ligne et/ou par une couleur caractéristique de la branche (28, 30, 32) respective en fonction de la branche (28, 30, 32) de laquelle proviennent les signaux écho reçus.

2. Appareil de contrôle ultrasonore selon la revendication 1, **caractérisé en ce qu'**un signe alphanumérique est associé aux points sur la courbe de mesure (44) qui correspondent respectivement à la transition entre une branche (28, 30) et la prochaine branche (28, 30).

3. Appareil de contrôle ultrasonore selon la revendication 1, **caractérisé en ce qu'**une ligne (46) intersecte la courbe de mesure (44) aux points de la courbe de mesure (44) qui correspondent respectivement à la transition entre une branche (28, 30) et la prochaine branche (28, 30).

4. Appareil de contrôle ultrasonore selon la revendication 1, **caractérisé en ce que** les zones de la courbe de mesure (44) qui proviennent d'une certaine branche (28, 30) sont représentées sur un fond caractéristique de la branche respective (28, 30).

5. Appareil de contrôle ultrasonore selon la revendication 1, **caractérisé en ce que** les zones de la courbe de mesure (44) qui proviennent d'une certaine branche (28, 30) sont représentées sur une couleur de fond caractéristique de la branche respective (28, 30).

6. Appareil de contrôle ultrasonore selon l'une quelconque des revendications 1 à 5, **caractérisé par** un moyen (38) qui est solidement relié au palpeur et qui sert à déterminer la position respective du palpeur sur la surface de la pièce (18) qu'il y a lieu d'examiner.

7. Appareil de contrôle ultrasonore selon l'une quelconque des revendications 1 à 6, **caractérisé en ce que**, en tenant compte des valeurs limites en termes d'amplitude et/ou des valeurs limites spatiales, on n'affiche sur l'écran (14) que la partie de la pièce (18) qui est intéressante à examiner.

8. Procédé pour représenter des signaux écho qui sont obtenus à l'aide d'un appareil de contrôle ultrasonore pour le contrôle non destructif d'une pièce (18) qu'il y a lieu d'examiner, l'appareil de contrôle ultrasonore comportant :
- un palpeur, notamment un palpeur d'angle (10),
- un émetteur qui est relié au palpeur et qui génère des impulsions d'émission et les délivre au palpeur,
- un récepteur qui est relié au palpeur et qui reçoit des signaux écho,
- un ordinateur pour le traitement des signaux écho reçus et
- un moniteur (12) avec un écran (14) pour représenter les signaux écho reçus, ce moniteur étant relié à l'ordinateur,
avec les étapes suivantes :
a. on déplace le palpeur le long de la pièce (18) qu'il y a lieu d'examiner et, ce faisant,
b. on insonifie sous un certain angle (a) la pièce (18) qu'il y a lieu d'examiner avec les impulsions ultrasonores de telle sorte que les impulsions ultrasonores pénètrent dans la pièce (18) qu'il y a lieu d'examiner, qu'elles sont réfléchies au moins une fois de la paroi arrière (24) de la pièce (18) qu'il y a lieu d'examiner et qu'elles forment de ce fait au moins une première branche (28) qui s'étend depuis la surface d'entrée (22) jusqu'à la paroi arrière (24), et une deuxième branche (30) qui s'étend alors depuis la paroi arrière (24) jusqu'à la surface d'entrée (22),
c. on calcule avec l'ordinateur les positions dans lesquelles une branche (28, 30, 32) passe dans une prochaine branche (28, 30, 32)
d. on affiche les signaux écho reçus sur l'écran (14) sous forme d'une courbe de mesure (44) dans un diagramme dans lequel la tension est inscrite en ordonnée (43) et le temps en abscisse (41), la courbe de mesure (44) étant affichée dans une sorte de ligne et/ou par une couleur caractéristique de la branche (28, 30, 32) respective en fonction de la branche (28, 30, 32) de laquelle proviennent les signaux écho reçus.

9. Procédé selon la revendication 8, **caractérisé en ce qu'**un signe alphanumérique est associé aux points sur la courbe de mesure (44) qui correspondent respectivement à la transition entre une branche (28, 30) et la prochaine branche (28, 30).

10. Procédé selon la revendication 8, **caractérisé en ce qu'**une ligne qui (46) intersecte la courbe de mesure (44) est représentée aux points de la courbe de mesure (44) qui correspondent respectivement à la transition entre une branche (28, 30) et la prochaine branche (28, 30).

11. Procédé selon la revendication 8, **caractérisé en ce que** les zones de la courbe de mesure (44) qui proviennent d'une certaine branche (28, 30) sont représentées sur un fond caractéristique de la branche respective (28, 30).

12. Procédé selon la revendication 8, **caractérisé en ce que** les zones de la courbe de mesure (44) qui proviennent d'une certaine branche (28, 30) sont représentées sur une couleur de fond caractéristique de la branche respective (28, 30).

13. Procédé selon l'une quelconque des revendications 8 à 12, **caractérisé par** un moyen (38) qui est solidement relié au palpeur et qui sert à déterminer la position respective du palpeur sur la surface de la pièce (18) qu'il y a lieu d'examiner.

14. Procédé selon l'une quelconque des revendications 8 à 13, **caractérisé en ce que**, en tenant compte des valeurs limites en termes d'amplitude et/ou des valeurs limites spatiales, on n'affiche sur l'écran (14) que la partie de la pièce (18) qui est intéressante à examiner.
